# EUROPEAN PATENT APPLICATION

(11) **EP 4 019 463 A1**
(43) Date of publication of application: **29.06.2022**
(21) Application number: 20853618.5
(22) Date of filing: 14.04.2020
(51) Int. Cl.: C01B 3/00, C01B 3/56, C25B 1/02, C25B 9/00

(54) **COMPRESSOR**

(30) Priority: 21.08.2019 JP 2019151190; 16.03.2020 JP 2020045394
(71) Applicant: Panasonic Intellectual Property Management Co., Ltd., Osaka-shi, Osaka 540-6207 (JP)
(72) Inventor: NAKAUE, Takayuki, Osaka-shi, Osaka 540-6207 (JP); WONG Chikuen, Osaka-shi, Osaka 540-6207 (JP)
(74) Representative: Grünecker Patent- und Rechtsanwälte PartG mbB
(86) International application number: PCT/JP2020/016397
(87) International publication number: WO 2021/033366

(57) **Abstract**

A compression apparatus of the present disclosure includes an electrolyte membrane; an anode catalyst layer in contact with one of main surfaces of the electrolyte membrane; a cathode catalyst layer in contact with the other of the main surfaces of the electrolyte membrane; an anode gas diffusion layer in contact with the anode catalyst layer; a cathode gas diffusion layer in contact with the cathode catalyst layer; a cathode separator that is provided on the cathode gas diffusion layer; and a voltage applicator that applies voltage between the anode catalyst layer and the cathode catalyst layer. The compression apparatus generates compressed hydrogen by applying the voltage with the voltage applicator to move protons, taken out of an anode fluid supplied to the anode catalyst layer, to the cathode catalyst layer via the electrolyte membrane. The cathode gas diffusion layer includes a porous carbon sheet and is configured such that a porosity of a first surface layer in a side of the cathode separator is lower than a porosity of a layer inward from the first surface layer.

## Description

### Technical Field

The present disclosure relates to a compression apparatus.

### Background Art

In recent years, hydrogen is drawing attention as a clean alternative energy source in place of fossil fuels in light of environmental problems such as global warming and energy problems such as depletion of petroleum resources. Combustion of hydrogen basically emits only water and there is no discharge of carbon dioxide being the cause of global warming and almost no discharge of nitrogen oxides and the like. Accordingly, hydrogen is expected as clean energy. As an apparatus that uses hydrogen as a fuel at high efficiency, there is, for example, a fuel cell. Development and wide-use of fuel cells for power sources of automobiles and home power generation are in progress.

In the coming hydrogen society, there is a demand for developing a technique that allows hydrogen to be stored in high density and allows hydrogen to be transported or used in a small capacity at low cost, in addition to production of hydrogen. Particularly, a hydrogen supply infrastructure needs to be constructed to encourage spread of the fuel cells designed to be distributed-type energy sources. Moreover, various studies for producing and refining high-purity hydrogen and storing hydrogen in high density are being made to stably supply hydrogen.

For example, PTL 1 proposes an ion pump (hydrogen pump) in which a laminate of a solid polymer electrolyte membrane, electrodes, and separators is sandwiched between end plates and is fastened, as an apparatus that refines and compresses hydrogen.

### Citation List

### Patent Literature

PTL 1: Japanese Unexamined Patent Application Publication (Translation of PCT application) No. 2008-518387

### Summary of Invention

### Technical Problem

An object of one aspect of the present disclosure is to provide, for example, a compression apparatus in which a contact resistance between a cathode separator and a cathode gas diffusion layer formed of a porous carbon sheet can be reduced from that in the technique in the related art.

### Solution to Problem

A compression apparatus according to an aspect of the present disclosure includes an electrolyte membrane; an anode catalyst layer in contact with one of main surfaces of the electrolyte membrane; a cathode catalyst layer in contact with the other of the main surfaces of the electrolyte membrane; an anode gas diffusion layer in contact with the anode catalyst layer; a cathode gas diffusion layer in contact with the cathode catalyst layer; a cathode separator that is provided on the cathode gas diffusion layer; and a voltage applicator that applies voltage between the anode catalyst layer and the cathode catalyst layer. The compression apparatus generates compressed hydrogen by applying the voltage with the voltage applicator to move protons, taken out of an anode fluid supplied to the anode catalyst layer, to the cathode catalyst layer via the electrolyte membrane, in which the cathode gas diffusion layer includes a porous carbon sheet and is configured such that a porosity of a first surface layer in a side of the cathode separator is lower than a porosity of a layer inward from the first surface layer. Advantageous Effects of Invention

The compression apparatus according to one aspect of the present disclosure has such an effect that a contact resistance between the cathode separator and the cathode gas diffusion layer formed of the porous carbon sheet can be reduced from that in the technique in the related art.

### Brief Description of Drawings

[Fig. 1A] Fig. 1A is a view illustrating an example of an electrochemical hydrogen pump in a first embodiment.
[Fig. 1B] Fig. 1B is an enlarged view of portion B in the electrochemical hydrogen pump of Fig. 1A.
[Fig. 2A] Fig. 2A is a view illustrating an example of the electrochemical hydrogen pump in the first embodiment.
[Fig. 2B] Fig. 2B is an enlarged view of portion B in the electrochemical hydrogen pump of Fig. 2A.
[Fig. 3] Fig. 3 is a view illustrating an example of a cathode gas diffusion layer in the electrochemical hydrogen pump of the first embodiment.
[Fig. 4] Fig. 4 is a view illustrating an example of a cathode gas diffusion layer in an electrochemical hydrogen pump of a second embodiment.
[Fig. 5A] Fig. 5A is a view illustrating an example of an electrochemical hydrogen pump in a third embodiment.
[Fig. 5B] Fig. 5B is an enlarged view of portion B in the electrochemical hydrogen pump of Fig. 5A.

### Description of Embodiments

In the hydrogen pump disclosed in PTL 1, a cathode gas diffusion layer is made of a porous carbon body and we found that there is room for improvement in a reduction of the contact resistance between the cathode gas diffusion layer and the cathode separator. This is based on the fact that the separator tends to deform on the high-voltage cathode side and the contact resistance between the cathode separator and the cathode gas diffusion layer may increase with this deformation.

The present inventors made earnest studies and, as a result, found that setting the porosity of a first surface layer of the cathode gas diffusion layer in the cathode separator side lower than the porosity of the layer inward from the first surface layer can reduce a possibility of an increase in the contact resistance between the cathode separator and the cathode gas diffusion layer.

A compression apparatus according to a first aspect of the present disclosure includes an electrolyte membrane; an anode catalyst layer in contact with one of main surfaces of the electrolyte membrane; a cathode catalyst layer in contact with the other of the main surfaces of the electrolyte membrane; an anode gas diffusion layer in contact with the anode catalyst layer; a cathode gas diffusion layer in contact with the cathode catalyst layer; a cathode separator that is provided on the cathode gas diffusion layer; and a voltage applicator that applies voltage between the anode catalyst layer and the cathode catalyst layer. The compression apparatus generates compressed hydrogen by applying the voltage with the voltage applicator to move protons, taken out of an anode fluid supplied to the anode catalyst layer, to the cathode catalyst layer via the electrolyte membrane, in which the cathode gas diffusion layer includes a porous carbon sheet and is configured such that a porosity of a first surface layer in a side of the cathode separator is lower than a porosity of a layer inward from the first surface layer.

According to this configuration, in the compression apparatus of this aspect, the contact resistance between the cathode separator and the cathode gas diffusion layer formed of the porous carbon sheet can be reduced from that in the technique in the related art.

Specifically, in the cathode gas diffusion layer, the lower the porosity of the first surface layer is, the lower the contact resistance between the first surface layer and the cathode separator is. Accordingly, in the compression apparatus of this aspect, setting the porosity of the first surface layer lower than the porosity of the layer inward from the first surface layer can reduce the contact resistance between the first surface layer of the cathode gas diffusion layer and the cathode separator. As a result, the compression apparatus of this aspect can maintain high efficiency in a hydrogen compression operation. Moreover, since the porosity of the layer inward from the first surface layer is higher than that of the first surface layer, a gas diffusion property of the cathode gas diffusion layer can be improved from that in the case where the porosity of the layer inward from the first surface layer is set as low as the porosity of the first surface layer.

A compression apparatus according to a second aspect of the present disclosure is the compression apparatus according to the first aspect, in which the cathode gas diffusion layer may include a layer containing carbon particles and a resin in the first surface layer.

According to this configuration, in the compression apparatus of this aspect, when the cathode gas diffusion layer is formed of, for example, the carbon fiber sheet, impregnating carbon fibers of the carbon fiber sheet on the side in contact with the cathode separator with the carbon particles and the resin can reduce the porosity of the first surface layer in the side of the cathode separator in the carbon fiber sheet.

Moreover, in the compression apparatus of this aspect, when the cathode gas diffusion layer is formed of, for example, the carbon fiber sheet, impregnating the carbon fibers of the carbon fiber sheet with the resin can increase bonding force between the carbon fibers. This can improve the durability of the compression apparatus of the aspect against warping of the carbon fiber sheet that occurs when the hydrogen compression operation is repeatedly started and stopped.

A compression apparatus according to a third aspect of the present disclosure is the compression apparatus according to the first or second aspect, in which, in the cathode gas diffusion layer, a resistivity of the first surface layer in a side of the cathode separator in a thickness direction may be lower than a resistivity of the layer inward from the first surface layer in the thickness direction.

According to this configuration, in the compression apparatus of this aspect, setting the resistivity of the first surface layer in the thickness direction lower than the resistivity of the layer inward from the first surface layer in the thickness direction as described above can reduce the contact resistance between the first surface layer of the cathode gas diffusion layer and the cathode separator.

A compression apparatus according to a fourth aspect of the present disclosure is the compression apparatus according to any one of the first to third aspects, in which, in the cathode gas diffusion layer, a volume density of the first surface layer may be higher than a volume density of the layer inward from the first surface layer.

In the cathode gas diffusion layer, the higher the volume density of the first surface layer is, the greater the contact area between the first surface layer and the cathode separator is. Accordingly, in the compression apparatus of this aspect, setting the volume density of the first surface layer higher than the volume density of the layer inward from the first surface layer can reduce the contact resistance between the first surface layer of the cathode gas diffusion layer and the cathode separator.

A compression apparatus according to a fifth aspect of the present disclosure is the compression apparatus according to the second aspect, in which the layer inward from the first surface layer may contain carbon particles and a resin and a volume density of the carbon particles contained in the layer inward from the first surface layer may be lower than a volume density of the carbon particles contained in the first surface layer.

The lower the volume density of the carbon particles contained in the layer inward from the first surface layer is, the higher the gas diffusion property of the layer inward from the first surface layer in an in-plane direction is. Thus, in the compression apparatus of this aspect, the aforementioned configuration can appropriately secure the gas diffusion property of the cathode gas diffusion layer in the in-plane direction.

Moreover, in the compression apparatus of this aspect, when the layer inward from the first surface layer is formed of, for example, the carbon fiber sheet, impregnating the carbon fibers of the carbon fiber sheet with the resin can increase the bonding force between the carbon fibers. This can improve the durability of the compression apparatus of the aspect against warping of the carbon fiber sheet that occurs when the hydrogen compression operation is repeatedly started and stopped.

A compression apparatus according to a sixth aspect of the present disclosure is the compression apparatus according to any one of the first to fifth aspects, in which the cathode separator may be provided with a manifold hole into which a cathode gas discharged from the cathode gas diffusion layer and containing the compressed hydrogen flows and a first communication path that allows the first surface layer and the manifold hole to communicate with each other, and in the first surface layer, a porosity of at least a path extending from a surface in contact with the first communication path to a surface in contact with the layer inward from the first surface layer may be higher than or equal to 20%.

If the porosity of the first surface layer is less than 20%, there is a risk that the gas diffusion property of the first surface layer cannot be appropriately secured. Accordingly, the compression apparatus of this aspect can be configured such that, in the first surface layer, the porosity of at least the path extending from the surface in contact with the first communication path to the surface in contact with the layer inward from the first surface layer is set higher than or equal to 20% to facilitate diffusion of the cathode gas in this path. This facilitates the discharge of the cathode gas to the manifold hole through the first communication path.

A compression apparatus according to a seventh aspect of the present disclosure is the compression apparatus according to any one of the first to fifth aspects, in which the cathode separator may be provided with a manifold hole into which a cathode gas discharged from the cathode gas diffusion layer and containing the compressed hydrogen flows and a second communication path that allows the layer inward from the first surface layer and the manifold hole to communicate with each other, and a porosity of the layer inward from the first surface layer may be higher than or equal to 20%. A compression apparatus according to an eighth aspect of the present disclosure is the compression apparatus according to the seventh aspect, in which the porosity of the first surface layer may be less than 20%.

If the porosity of the layer inward from the first surface layer is less than 20%, there is a risk that the gas diffusion property of the inward layer cannot be appropriately secured. Accordingly, the compression apparatus of this aspect can be configured such that the porosity of the layer inward from the first surface layer is set higher than or equal to 20% to facilitate diffusion of the cathode gas in the inward layer. This facilitates the discharge of the cathode gas to the manifold hole through the second communication path.

Moreover, in the compression apparatus of this aspect, setting the porosity of the first surface layer to less than 20% can reduce the contact resistance between the first surface layer of the cathode gas diffusion layer and the cathode separator.

As described above, the compression apparatus of this aspect can achieve both an improvement in the gas diffusion property of the cathode gas diffusion layer and a reduction in the contact resistance between the cathode gas diffusion layer and the cathode separator.

Embodiments of the present disclosure are described below with reference to the attached drawings. Note that, the embodiments described below illustrate examples of the aforementioned aspects. Accordingly, shapes, materials, constituent elements, arrangement positions and connection modes of the constituent elements, and the like described below are merely examples and do not limit the aforementioned aspects unless described in the claims. Moreover, constituent elements not described in the independent claim describing the mostgeneric concept of the aforementioned aspects among the following constituent elements are described as optional constituent elements. Furthermore, description of parts denoted by the same reference numerals in the drawings is omitted in some cases. The drawings schematically illustrate the constituent elements to facilitate the understanding and sometimes do not illustrate the constituent elements in accurate shapes and dimension ratios.

### (First Embodiment)

Any of various types of gases and liquids that generate protons in an oxidation reaction at the anode can be assumed to be used as the anode fluid of the aforementioned compression apparatus. For example, when the compression apparatus is an electrochemical hydrogen pump, a hydrogen-containing gas or the like can be given as the anode fluid. Meanwhile, for example, when the compression apparatus is a water electrolysis apparatus, liquid water or the like can be given as the anode fluid. In the following embodiment, description is given of a configuration and operations of the electrochemical hydrogen pump that is an example of the compression apparatus in the case where the anode fluid is the hydrogen-containing gas.

### [Apparatus Configuration]

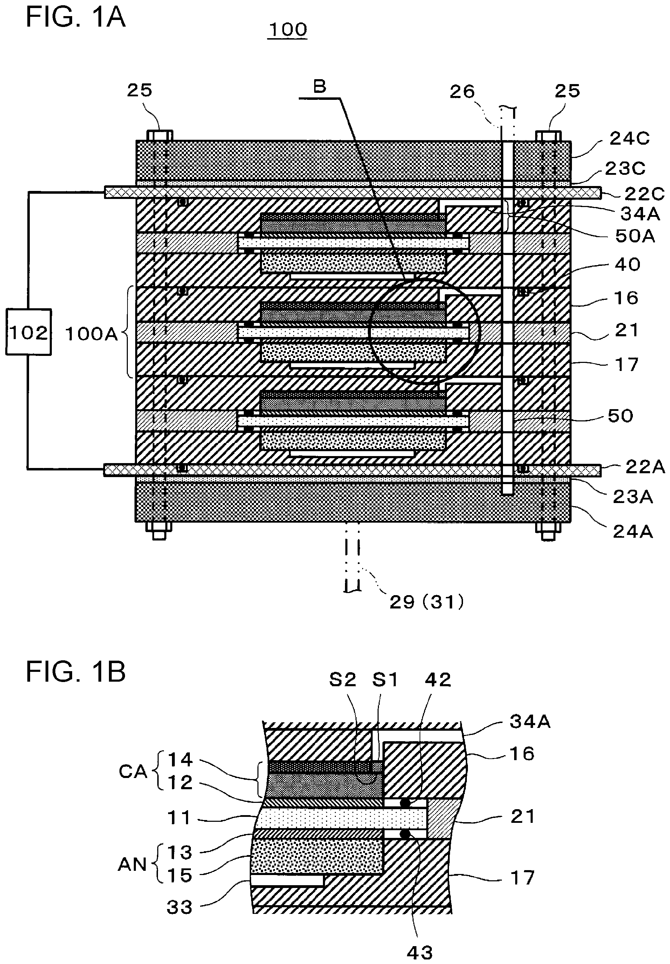

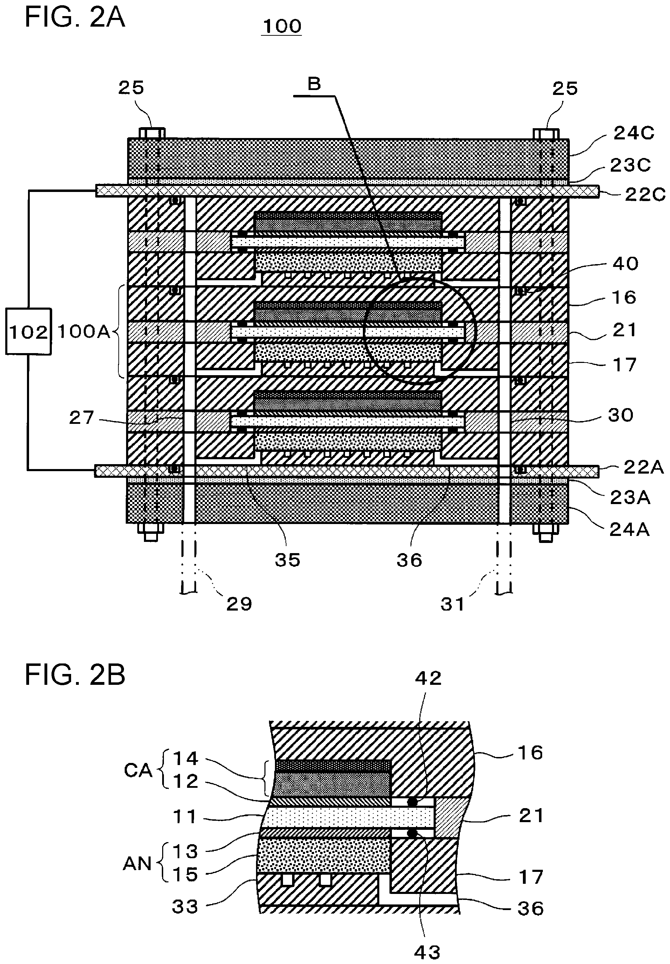

Figs. 1A and 2A are views illustrating an example of the electrochemical hydrogen pump in the first embodiment. Fig. 1B is an enlarged view of portion B in the electrochemical hydrogen pump of Fig. 1A. Fig. 2B is an enlarged view of portion B in the electrochemical hydrogen pump of Fig. 2A.

Fig. 1A illustrates a vertical cross section of an electrochemical hydrogen pump 100 including a straight line passing the center of the electrochemical hydrogen pump 100 and the center of a cathode gas discharge manifold 50 in plan view. Moreover, Fig. 2A illustrates a vertical cross section of the electrochemical hydrogen pump 100 including a straight line passing the center of the electrochemical hydrogen pump 100, the center of an anode gas introduction manifold 27, and the center of an anode gas discharge manifold 30 in plan view.

In the example illustrated in Figs. 1A and 2A, the electrochemical hydrogen pump 100 includes at least one hydrogen pump unit 100A.

In the electrochemical hydrogen pump 100, multiple hydrogen pump units 100A are stacked one on top of another. For example, in Figs. 1A and 2A, three hydrogen pump units 100A are stacked one on top of another, but the number of hydrogen pump units 100A is not limited to this. Specifically, the number of hydrogen pump units 100A can be set to an appropriate number based on operation conditions such as an amount of hydrogen to be compressed by the electrochemical hydrogen pump 100.

Each hydrogen pump unit 100A includes an electrolyte membrane 11, an anode electrode AN, a cathode electrode CA, a cathode separator 16, an anode separator 17, and an insulator 21. In each hydrogen pump unit 100A, the electrolyte membrane 11, an anode catalyst layer 13, a cathode catalyst layer 12, an anode gas diffusion layer 15, a cathode gas diffusion layer 14, the anode separator 17, and the cathode separator 16 are stacked one on top of another.

The anode electrode AN is provided on one of main surfaces of the electrolyte membrane 11. The anode electrode AN is an electrode including the anode catalyst layer 13 and the anode gas diffusion layer 15. Note that, in plan view, an annular sealing member 43 is provided to surround a periphery of the anode catalyst layer 13 and the anode catalyst layer 13 is appropriately sealed by the sealing member 43.

The cathode electrode CA is provided on the other main surface of the electrolyte membrane 11. The cathode electrode CA is an electrode including the cathode catalyst layer 12 and the cathode gas diffusion layer 14. Note that, in plan view, an annular sealing member 42 is provided to surround a periphery of the cathode catalyst layer 12 and the cathode catalyst layer 12 is appropriately sealed by the sealing member 42.

As described above, the electrolyte membrane 11 is sandwiched between the anode electrode AN and the cathode electrode CA while coming into contact with the anode catalyst layer 13 and the cathode catalyst layer 12. A laminate of the cathode electrode CA, the electrolyte membrane 11, and the anode electrode AN is referred to as a membrane electrode assembly (hereinafter, MEA).

The electrolyte membrane 11 is proton conducting. The electrolyte membrane 11 may have any configuration as long as the electrolyte membrane 11 is proton conducting. A fluorine-based polymer electrolyte membrane and a hydrocarbon-based polymer electrolyte membrane can be given as examples of the electrolyte membrane 11, but the electrolyte membrane 11 is not limited to these membranes. Specifically, for example, Nafion (registered trademark, manufactured by DuPont), Aciplex (registered trademark, manufactured by Asahi Kasei Corporation), and the like can be used as the electrolyte membrane 11.

The anode catalyst layer 13 is in contact with the one main surface of the electrolyte membrane 11. The anode catalyst layer 13 contains, for example, platinum as a catalyst metal, but is not limited to this configuration.

The cathode catalyst layer 12 is in contact with the other main surface of the electrolyte membrane 11. The cathode catalyst layer 12 contains, for example, platinum as a catalyst metal, but is not limited to this configuration.

Carbon particles such carbon black and graphite, electrically conductive oxide particles, and the like can be given as examples of a catalyst support of the cathode catalyst layer 12 and the anode catalyst layer 13, but the catalyst support is not limited to these particles.

In the cathode catalyst layer 12 and the anode catalyst layer 13, fine particles of the catalyst metal are supported on the catalyst support in a highly dispersed manner. Moreover, a proton-conductive ionomer component is generally added to the cathode catalyst layer 12 and the anode catalyst layer 13 to increase an electrode reaction field.

The cathode gas diffusion layer 14 is in contact with the cathode catalyst layer 12. Moreover, the cathode gas diffusion layer 14 is made of a porous material, is electrically conductive, and has a gas diffusion property. Furthermore, the cathode gas diffusion layer 14 desirably has such elasticity that the cathode gas diffusion layer 14 appropriately follows displacement and deformation of component members of the electrochemical hydrogen pump 100 occurring in the operation of the electrochemical hydrogen pump 100 due to differential pressure between the cathode electrode CA and the anode electrode AN.

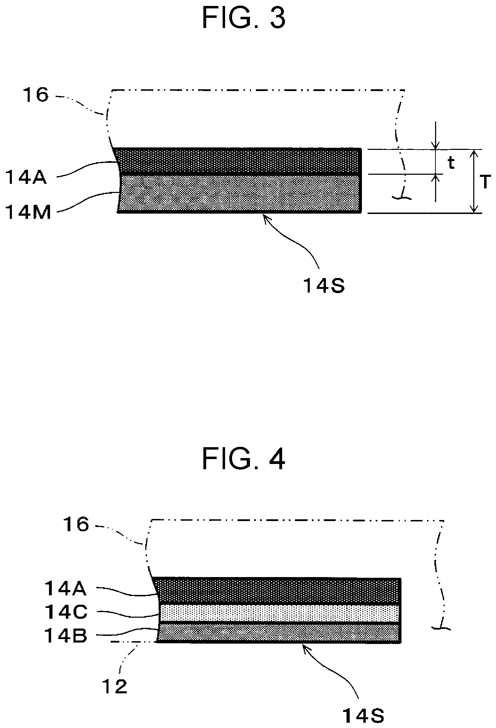

As illustrated in Fig. 3, the cathode gas diffusion layer 14 includes a porous carbon sheet 14S and the porosity of a first surface layer 14A on the cathode separator 16 side is lower than the porosity of a layer 14M inward from the first surface layer 14A.

The porosities of these layers can be evaluated with, for example, a mercury porosimeter ("AutoPore III 9410" manufactured by Shimadzu Corporation). This apparatus can measure the volume of pores having pore diameters of about several nm to about 500 µm by using intrusion of mercury into the pores. The porosity of each of the first surface layer 14A and the layer 14M inward from the first surface layer 14A can be found from the volume of the pores and the solid portion of each of the first surface layer 14A and the layer 14M inward from the first surface layer 14A.

A specific configuration for making the porosity of the first surface layer 14A lower than the porosity of the layer 14M inward from the first surface layer 14A in the cathode gas diffusion layer 14 is described in the examples.

In the electrochemical hydrogen pump 100 of the embodiment, the porous carbon sheet 14S made of carbon fibers is used as the cathode gas diffusion layer 14. For example, the porous carbon sheet 14S may be a porous carbon fiber sheet such as carbon paper, carbon cloth, or carbon felt. Note that carbon fibers do not have to be used as a base material of the porous carbon sheet 14S.

Moreover, in the electrochemical hydrogen pump 100 of the embodiment, the thickness t of the first surface layer 14A relative to the thickness T of the entire porous carbon sheet 14S is set to have a relationship of 0<t/T<1 from the viewpoint of suppressing a decrease in the gas diffusion property of the cathode gas diffusion layer 14. The layer 14M inward from the first surface layer 14A may include an intermediate layer located in an intermediate portion in the thickness direction of the porous carbon sheet 14S. Details are described in a second embodiment.

The anode gas diffusion layer 15 is in contact with the anode catalyst layer 13. Moreover, the anode gas diffusion layer 15 is made of a porous material, is electrically conductive, and has a gas diffusion property. Furthermore, the anode gas diffusion layer 15 desirably has stiffness high enough to suppress the displacement and deformation of the component members of the electrochemical hydrogen pump 100 occurring in the operation of the electrochemical hydrogen pump 100 due to the differential pressure between the cathode electrode CA and the anode electrode AN.

Note that, in the electrochemical hydrogen pump 100 of the embodiment, the anode gas diffusion layer 15 may include a porous carbon sheet. In this case, a sintered compact made of carbon particles, carbon fibers, or the like as a row material can be used as a base material of the porous carbon sheet.

However, the base material of the anode gas diffusion layer 15 is not limited to the aforementioned sintered compact. For example, a sintered compact of metal fibers made of titanium, titanium alloy, stainless steel, or the like as a row material or a sintered compact of metal powder made of any of these substances as a raw material can be used as the base material of the anode gas diffusion layer 15. Moreover, for example, an expanded metal, a metal mesh, a punching metal, or the like can be used as the base material of the anode gas diffusion layer 15.

The anode separator 17 is provided on the anode gas diffusion layer 15 of the anode electrode AN. The cathode separator 16 is provided on the cathode gas diffusion layer 14 of the cathode electrode CA. A recess portion is provided in the center portion of each of the cathode separator 16 and the anode separator 17. The cathode gas diffusion layer 14 and the anode gas diffusion layer 15 are housed in the respective recess portions.

The hydrogen pump unit 100A is formed by sandwiching the aforementioned MEA between the cathode separator 16 and the anode separator 17 as described above.

As illustrated in Figs. 1A and 2A, a main surface of the cathode separator 16 in contact with the cathode gas diffusion layer 14 is formed of a flat surface provided with no cathode gas flow path. This can increase the contact area between the porous carbon sheet 14S of the cathode gas diffusion layer 14 and the cathode separator 16 from that in the case where the cathode gas flow path is provided on the main surface of the cathode separator 16. Then, in the electrochemical hydrogen pump 100, the contact resistance between the porous carbon sheet 14S and the cathode separator 16 can be reduced.

Meanwhile, a main surface of the anode separator 17 in contact with the anode gas diffusion layer 15 is provided with, for example, in plan view, a serpentine-shaped anode gas flow path 33 including multiple U-shaped foldedback portions and multiple straight line portions. The straight line portions of the anode gas flow path 33 extend in a direction perpendicular to a sheet surface of Fig. 2A. However, the aforementioned anode gas flow path 33 is an example and the anode gas flow path is not limited to this example. For example, the anode gas flow path may be formed of multiple linear flow paths.

Moreover, the annular and flat plate shaped insulator 21 provided to surround the periphery of the MEA is sandwiched between the conductive cathode separator 16 and anode separator 17. Short-circuit between the cathode separator 16 and the anode separator 17 is thereby prevented.

The electrochemical hydrogen pump 100 includes a first end plate and a second end plate provided at both ends in the stacking direction of the hydrogen pump units 100A and fasteners 25 that fasten the hydrogen pump units 100A, the first end plate, and the second end plate to one another in the stacking direction.

Note that, in the example illustrated in Figs. 1A and 2A, a cathode end plate 24C and an anode end plate 24A correspond to the aforementioned first end plate and second end plate, respectively. Specifically, the anode end plate 24A is an end plate provided on the anode separator 17 located at one end in the stacking direction in which the members of the hydrogen pump units 100A are stacked. Moreover, the cathode end plate 24C is an end plate provided on the cathode separator 16 located at the other end in the stacking direction in which the members of the hydrogen pump units 100A are stacked.

The fasteners 25 may have any configuration as long as the fasteners 25 can fasten the hydrogen pump units 100A, the cathode end plate 24C, and the anode end plate 24A to one another in the stacking direction.

Fasteners such as bolts and nuts with spring washers can be given as examples of the fasteners 25.

In this case, the bolts of the fasteners 25 may be configured to penetrate only the anode end plate 24A and the cathode end plate 24C. However, in the electrochemical hydrogen pump 100 of the embodiment, the bolts penetrate the members of the three hydrogen pump units 100A, a cathode power supply plate 22C, a cathode insulating plate 23C, an anode power supply plate 22A, an anode insulating plate 23A, the anode end plate 24A, and the cathode end plate 24C. The fasteners 25 apply desired fastening pressure to the hydrogen pump units 100A by sandwiching the end surface of the cathode separator 16 located at the other end in the aforementioned stacking direction and the end surface of the anode separator 17 located at the one end in the aforementioned stacking direction between the cathode end plate 24C and the anode end plate 24A via a set of the cathode power supply plate 22C and the cathode insulating plate 23C and a set of the anode power supply plate 22A and the anode insulating plate 23A.

In the electrochemical hydrogen pump 100 in the embodiment, the three hydrogen pump units 100A are thus appropriately held in a stacked state by the fastening pressure of the fasteners 25 in the aforementioned stacking direction. Moreover, since the bolts of the fasteners 25 penetrate the members of the electrochemical hydrogen pump 100, in-plane direction movement of these members can be appropriately suppressed.

In the electrochemical hydrogen pump 100 of the embodiment, the cathode gas diffusion layers 14 of the respective hydrogen pump units 100A communicate with one another. The configuration in which the cathode gas diffusion layers 14 communicate with one another is described below with reference to the drawings.

First, as illustrated in Fig. 1A, the cathode gas discharge manifold 50 is formed by causing penetration holes provided in the members of the three hydrogen pump units 100A and the cathode end plate 24C and a non-penetration hole provided in the anode end plate 24A to communicate with one another. Moreover, the cathode end plate 24C is provided with a cathode gas discharge path 26. The cathode gas discharge path 26 may be formed of a pipe through which hydrogen (H₂) discharged from the cathode electrodes CA flows. Moreover, the cathode gas discharge path 26 communicates with the aforementioned cathode gas discharge manifold 50.

The cathode gas discharge manifold 50 also communicates with appropriate portions of the cathode gas diffusion layers 14 in the respective hydrogen pump units 100A via respective first communication paths 34A. Hydrogen having passed the cathode gas diffusion layers 14 and the first communication paths 34A of the respective hydrogen pump units 100A thereby merges in the cathode gas discharge manifold 50. Then, the merged hydrogen is guided to the cathode gas discharge path 26. In the example illustrated in Figs. 1A and 1B, each cathode separator 16 is provided with a manifold hole 50A into which the cathode gas discharged from the cathode gas diffusion layer 14 and containing the aforementioned compressed hydrogen flows and the first communication path 34A that allows the first surface layer 14A (see Fig. 3) and the manifold hole 50A to communicate with each other. The first communication path 34A may be formed of, for example, a groove and a hole provided in the cathode separator 16. In the first surface layer 14A, the porosity of at least a path extending from a surface S1 in contact with the first communication path 34A to a surface S2 in contact with the layer 14M inward from the first surface layer 14A (see Fig. 3) is higher than or equal to 20%.

In this case, there is no need to set the porosity of the entire first surface layer 14A to higher than or equal to 20%. For example, the first surface layer 14A may be configured such that the porosity of only the region directly below a portion of the first communication path 34A extending in the up-down direction is higher than or equal to 20% as illustrated by a different shade pattern in Fig. 1B. In other words, in this case, almost the entire region of the first surface layer 14A in contact with a bottom surface of the recess portion of the cathode separator 16 may have a porosity of less than 20% (for example, almost 0%), which is lower than the porosity of the region directly below the portion of the first communication path 34A. The contact resistance between the first surface layer 14A and the cathode separator 16 can be thereby reduced from that in the case where the porosity of the entire first surface layer 14A is set higher than or equal to 20%.

Note that the aforementioned communication path that allows the first surface layer 14A and the manifold hole 50A to communicate with each other is not limited to the communication path in this example. Other examples of the communication path are described in a third embodiment.

The cathode gas diffusion layers 14 of the respective hydrogen pump units 100A thus communicate with one another via the first communication paths 34A of the respective hydrogen pump units 100A and the cathode gas discharge manifold 50.

Annular sealing members 40 such as O-rings are provided between each adjacent pair of the cathode separator 16 and the anode separator 17, between the cathode separator 16 and the cathode power supply plate 22C, and between the anode separator 17 and the anode power supply plate 22A to surround the cathode gas discharge manifold 50 in plan view and the cathode gas discharge manifold 50 is appropriately sealed by the sealing members 40.

As illustrated in Fig. 2A, the anode end plate 24A is provided with an anode gas introduction path 29. The anode gas introduction path 29 may be formed of a pipe through which an anode gas to be supplied to the anode electrodes AN flows. A hydrogen-containing gas that contains water vapor can be given as an example of the anode gas. Moreover, the anode gas introduction path 29 communicates with the tubular anode gas introduction manifold 27. Note that the anode gas introduction manifold 27 is formed by causing penetration holes provided in the members of the three hydrogen pump units 100A and the anode end plate 24A to communicate with one another.

Moreover, the anode gas introduction manifold 27 communicates with one end portions of the anode gas flow paths 33 of the respective hydrogen pump units 100A via first anode gas passing paths 35. The anode gas supplied from the anode gas introduction path 29 to the anode gas introduction manifold 27 passes through the first anode gas passing paths 35 of the respective hydrogen pump units 100A and is distributed to the hydrogen pump units 100A. Then, the distributed anode gas is supplied from the anode gas diffusion layers 15 to the anode catalyst layers 13 while passing through the anode gas flow paths 33.

Moreover, as illustrated in Fig. 2A, the anode end plate 24A is provided with an anode gas discharge path 31. The anode gas discharge path 31 may be formed of a pipe through which the anode gas discharged from the anode electrodes AN flows. The anode gas discharge path 31 communicates with the tubular anode gas discharge manifold 30. The anode gas discharge manifold 30 is formed by causing penetration holes provided in the members of the three hydrogen pump units 100A and the anode end plate 24A to communicate with one another.

Furthermore, the anode gas discharge manifold 30 communicates with the other end portions of the anode gas flow paths 33 of the respective hydrogen pump units 100A via second anode gas passing paths 36. The anode gas having passed the anode gas flow paths 33 of the respective hydrogen pump units 100A is thereby supplied to the anode gas discharge manifold 30 through the second anode gas passing paths 36 and merges in the anode gas discharge manifold 30. Then, the merged anode gas is guided to the anode gas discharge path 31.

The annular sealing members 40 such as O-rings are provided between each adjacent pair of the cathode separator 16 and the anode separator 17, between the cathode separator 16 and the cathode power supply plate 22C, and between the anode separator 17 and the anode power supply plate 22A to surround the anode gas introduction manifold 27 and the anode gas discharge manifold 30 in plan view and the anode gas introduction manifold 27 and the anode gas discharge manifold 30 are appropriately sealed by the sealing members 40.

As illustrated in Figs. 1A and 2A, the electrochemical hydrogen pump 100 includes a voltage applicator 102.

The voltage applicator 102 is a device that applies voltage between each pair of the anode catalyst layer 13 and the cathode catalyst layer 12. Specifically, the electrochemical hydrogen pump 100 is an apparatus that applies the aforementioned voltage with the voltage applicator 102 to move protons, taken out from the hydrogen-containing gas supplied to the anode catalyst layers 13, to the cathode catalyst layers 12 via the electrolyte membranes 11 and to generate the compressed hydrogen.

Specifically, a high potential of the voltage applicator 102 is applied to the anode catalyst layers 13 and a low potential of the voltage applicator 102 is applied to the cathode catalyst layers 12. The voltage applicator 102 may have any configuration as long as it can apply voltage between each pair of the anode catalyst layer 13 and the cathode catalyst layer 12. For example, the voltage applicator 102 may be a device that adjusts voltage applied between each pair of the anode catalyst layer 13 and the cathode catalyst layer 12. In this case, the voltage applicator 102 includes a DC/DC convertor when the voltage applicator 102 is connected to a DC power supply such as a battery, a solar cell, or a fuel cell, and includes an AC/DC convertor when the voltage applicator 102 is connected to an AC power supply such as utility power.

Moreover, the voltage applicator 102 may be, for example, a power type power supply that causes power supplied to each hydrogen pump unit 100A to take a predetermined set value by adjusting voltage applied between the anode catalyst layer 13 and the cathode catalyst layer 12 and a current flowing between the anode catalyst layer 13 and the cathode catalyst layer 12.

Note that, in the example illustrated in Figs. 1A and 2A, a low potential side terminal of the voltage applicator 102 is connected to the cathode power supply plate 22C and a high potential side terminal of the voltage applicator 102 is connected to the anode power supply plate 22A. The cathode power supply plate 22C is in electrical contact with the cathode separator 16 located at the other end in the aforementioned stacking direction and the anode power supply plate 22A is in electrical contact with the anode separator 17 located at the one end in the aforementioned stacking direction.

Although illustration is omitted, a hydrogen system including the aforementioned electrochemical hydrogen pump 100 can be built. In this case, the hydrogen system is provided with devices necessary for a hydrogen compression operation of the hydrogen system as appropriate.

For example, the hydrogen system may be provided with a dew point adjuster (for example, humidifier) that adjusts the dew point of a mixed gas obtained by mixing a hydrogen-containing anode gas with a high humidity discharged from the anode electrodes AN through the anode gas discharge path 31 and a hydrogen-containing anode gas with a low humidity supplied from an external hydrogen supply source through the anode gas introduction path 29. In this case, the hydrogen-containing anode gas of the external hydrogen supply source may be generated by, for example, a water electrolysis device.

Moreover, the hydrogen system may be provided with, for example, a temperature detector that detects the temperature of the electrochemical hydrogen pump 100, a hydrogen storage that temporarily stores hydrogen discharged from the cathode electrodes CA of the electrochemical hydrogen pump 100, a pressure detector that detects hydrogen gas pressure in the hydrogen storage, and the like.

Note that the configuration of the electrochemical hydrogen pump 100 and the various not-illustrated devices in the hydrogen system that are described above are examples and the configuration and the devices are not limited to these examples.

For example, there may be employed a dead-end structure which is provided with neither the anode gas discharge manifold 30 nor the anode gas discharge path 31 and in which all hydrogen in the anode gas supplied to the anode electrodes AN through the anode gas introduction manifold 27 is compressed in the cathode electrodes CA.

### [Operation]

An example of the hydrogen compression operation of the electrochemical hydrogen pump 100 is described below with reference to the drawings.

The following operation may be performed by, for example, causing a computation circuit of a not-illustrated controller to read a control program from a storage circuit of the controller. However, the controller does not always have to perform the following operation. An operator may perform part of the operation. Moreover, in the following description, description is given of the case where the hydrogen-containing gas containing water vapor is supplied to the anode electrodes AN of the electrochemical hydrogen pump 100 as the anode gas.

First, a low-pressure hydrogen-containing gas is supplied to the anode electrodes AN of the electrochemical hydrogen pump 100 and the voltage of the voltage applicator 102 is supplied to the electrochemical hydrogen pump 100.

Then, hydrogen molecules separate into protons and electrons in the anode catalyst layers 13 of the anode electrodes AN (formula (1)). The protons are conducted through the electrolyte membranes 11 and move to the cathode catalyst layers 12. The electrons move to the cathode catalyst layers 12 through the voltage applicator 102.

Then, hydrogen molecules are generated again in the cathode catalyst layer 12 (formula (2)). It is known that, when the protons are conducted through the electrolyte membranes 11, a predetermined amount of water moves together with the protons from the anode electrodes AN to the cathode electrodes CA as electroosmosis water.

In this case, hydrogen (H₂) generated in the cathode electrodes CA can be compressed by increasing pressure loss in a hydrogen discharge path by using a not-illustrated flow rate adjuster. Note that the cathode gas discharge path 26 of Fig. 1A can give as an example of the hydrogen discharge path. Moreover, a back-pressure valve, an adjustment valve, and the like provided in the hydrogen discharge path can be given as examples of the flow rate adjuster. In this case, increasing the pressure loss in the hydrogen discharge path corresponds to reducing an opening degree of the back-pressure valve or the adjustment valve provided in the hydrogen discharge path.

Anode electrode:

   H₂ (low pressure)→2H⁺+2e⁻ ...(1)
Cathode electrode:

   2H⁺+2e⁻→H₂ (high pressure) ...(2)

As described above, in the electrochemical hydrogen pump 100, the voltage applicator 102 applies the aforementioned voltage to move the protons, taken out from the hydrogen-containing gas supplied to the anode electrodes AN, to the cathode electrodes CA via the electrolyte membranes 11. Then, compressed hydrogen (H₂) is generated in the cathode electrodes CA. The hydrogen compression operation of the electrochemical hydrogen pump 100 is thereby performed and the hydrogen compressed in the cathode electrodes CA is temporarily stored in, for example, the not-illustrated hydrogen storage. The hydrogen stored in the hydrogen storage is supplied to a hydrogen demanding body in a timely manner. Note that an apparatus such as a fuel cell that generates power by using hydrogen can be given as an example of the hydrogen demanding body.

As described above, in the electrochemical hydrogen pump 100 of the embodiment, the contact resistance between each pair of the cathode separator 16 and the cathode gas diffusion layer 14 formed of the porous carbon sheet can be reduced from that in the technique in the related art.

Specifically, the lower the porosity of the first surface layer 14A in the cathode gas diffusion layer 14 is, the lower the contact resistance between the first surface layer 14A and the cathode separator 16 is. Accordingly, in the electrochemical hydrogen pump 100 of the embodiment, setting the porosity of the first surface layer 14A lower than the porosity of the layer 14M inward from the first surface layer 14A can reduce the contact resistance between the first surface layer 14A of the cathode gas diffusion layer 14 and the cathode separator 16. As a result, the electrochemical hydrogen pump 100 of the embodiment can maintain high efficiency in the hydrogen compression operation.

Moreover, since the porosity of the layer 14M inward from the first surface layer 14A is higher than that of the first surface layer 14A, the gas diffusion property of the cathode gas diffusion layer 14 can be improved from that in the case where the porosity of the layer 14M inward from the first surface layer 14A is set to a porosity as low as the first surface layer 14A. In this case, if the porosity of the first surface layer 14A is less than 20%, there is a risk that the gas diffusion property of the first surface layer 14A cannot be appropriately secured. Accordingly, the electrochemical hydrogen pump 100 of the embodiment can be configured such that, in the first surface layer 14A, the porosity of at least the path extending from the surface S1 in contact with the first communication path 34A to the surface S2 in contact with the layer 14M inward from the first surface layer 14A is set higher than or equal to 20% to facilitate diffusion of the cathode gas in this path. This facilitates the discharge of the cathode gas to the manifold hole 50A through the first communication path 34A.

### (First Example)

An electrochemical hydrogen pump 100 of a first example is the same as the electrochemical hydrogen pump 100 of the first embodiment except for the configuration of each cathode gas diffusion layer 14 to be described below.

In the electrochemical hydrogen pump 100 of the example, each cathode gas diffusion layer 14 includes a layer containing carbon particles and a resin in the first surface layer 14A.

The cathode gas diffusion layer 14 may be formed of a carbon fiber sheet. In this case, the layer containing the carbon particles and the resin in the first surface layer 14A may be a layer in which the carbon fibers of the first surface layer 14A on the side coming into contact with the cathode separator 16 are impregnated with the carbon particles and the resin. This can improve the electrical conductivity of the first surface layer 14A and the contact property with the cathode separator 16.

The aforementioned carbon particles may be artificial graphite particles or natural graphite particles. Electrically conductive carbon black and the like can be given as examples of the artificial graphite particles. Acetylene black, Ketjenblack, or the like can be used as the electrically conductive carbon black. Among these, acetylene black is desirably used as the carbon particles from the viewpoint of excellent electric conductivity, but the carbon particles are not limited to this.

Moreover, polytetrafluoroethylene (PTFE), copolymer of tetrafluoroethylene and hexafluoropropylene (FEP), polyvinylidene fluoride (PVDF), copolymer of tetrafluoroethylene and ethylene (ETFE), polychlorotrifluoroethylene (PCTFE), copolymer of tetrafluoroethylene and perfluoroalkyl vinyl ether (PFA), and the like can be given as examples of a material of the aforementioned resin. Among these, PTFE is desirably used as the resin material from the viewpoint of heat resistance, a water repelling property, and chemical resistance, but the resin material is not limited to this. Note that a raw material of PTFE can be used in, for example, a dispersed state (liquid state), a powder state, or the like.

When the cathode gas diffusion layer 14 is formed of the carbon fiber sheet, the layer containing the carbon particles and the resin in the first surface layer 14A can be formed by, for example, impregnating the surface of the carbon fiber sheet with the carbon particles and the resin as described below.

First, a solution in which the carbon particles and resin powder are dispersed in a solvent is evenly applied to the carbon fiber sheet such that the surface of the carbon fiber sheet is impregnated with the solution.

Next, the solution with which the surface of the carbon fiber sheet is impregnated is, for example, dried and heat-treated at a predetermined temperature. A layer containing the carbon particles and the resin is thus included in the surface layer (first surface layer 14A) of the carbon fiber sheet. The cathode gas diffusion layer 14 of the example can be thereby obtained.

Note that the manufacturing method and the configuration of the cathode gas diffusion layer 14 described above are examples and the manufacturing method and the configuration are not limited to these examples.

Moreover, a spray application method, a bar coater application method, a transfer application method, a dip application method, and the like can be given as examples of the method of applying the aforementioned solution, but the application method is not limited to these examples.

As described above, in the electrochemical hydrogen pump 100 of the example, when the cathode gas diffusion layer 14 is formed of, for example, the carbon fiber sheet, impregnating the carbon fibers of the carbon fiber sheet on the side coming into contact with the cathode separator 16 with the carbon particles and the resin can reduce the porosity of the first surface layer 14A on the cathode separator 16 side in the carbon fiber sheet.

Moreover, in the electrochemical hydrogen pump 100 of the example, when the cathode gas diffusion layer 14 is formed of, for example, the carbon fiber sheet, impregnating the carbon fibers of the carbon fiber sheet with the resin can increase the bonding force between the carbon fibers. This can improve the durability of the electrochemical hydrogen pump 100 of the example against warping of the carbon fiber sheet that occurs when the hydrogen compression operation is repeatedly started and stopped.

The electrochemical hydrogen pump 100 of the example may be the same as the electrochemical hydrogen pump 100 of the first embodiment except for the aforementioned characteristics.

### (Second Example)

An electrochemical hydrogen pump 100 of a second example is the same as the electrochemical hydrogen pump 100 of the first embodiment except for the configuration of each cathode gas diffusion layer 14 to be described below.

In the electrochemical hydrogen pump 100 of the example, each cathode gas diffusion layer 14 is configured such that the resistivity of the first surface layer 14A in the thickness direction is lower than the resistivity of the layer 14M inward from the first surface layer 14A in the thickness direction.

These resistivities can be evaluated with, for example, a 1-kHz AC ohmmeter ("MODEL 3566" manufactured by Tsuruga Electric Corporation) or the like.

In the electrochemical hydrogen pump of the example, setting the resistivity of the first surface layer 14A in the thickness direction lower than the resistivity of the layer 14M inward from the first surface layer 14A in the thickness direction can reduce the contact resistance between the first surface layer 14A of the cathode gas diffusion layer 14 and the cathode separator 16.

The electrochemical hydrogen pump 100 of the example may be the same as the electrochemical hydrogen pump 100 of the first embodiment or the first example except for the aforementioned characteristics.

### (Third Example)

An electrochemical hydrogen pump 100 of a third example is the same as the electrochemical hydrogen pump 100 of the first embodiment except for the configuration of each cathode gas diffusion layer 14 to be described below.

In the electrochemical hydrogen pump 100 of the example, each cathode gas diffusion layer 14 is configured such that the volume density of the first surface layer 14A is higher than the volume density of the layer 14M inward from the first surface layer 14A.

Note that the aforementioned volume densities can be each evaluated by, for example, performing polishing to leave only a layer desired to be measured as a sample and evaluating this sample by a constant volume expansion method (automatic dry-process density meter AccuPyc 1340 manufactured by Shimadzu Corporation). This apparatus has a structure in which a sample chamber and an expansion chamber are connected to each other via a valve, and is capable of filling the chamber with helium gas and measuring the volume density of the sample based on changes in the pressures of the sample chamber and the expansion chamber that are caused by opening and closing operations of the valve.

In the cathode gas diffusion layer 14, the higher the volume density of the first surface layer 14A is, the greater the contact area between the first surface layer 14A and the cathode separator 16 is. Accordingly, in the electrochemical hydrogen pump 100 of the example, setting the volume density of the first surface layer 14A higher than the volume density of the layer 14M inward from the first surface layer 14A can reduce the contact resistance between the first surface layer 14A of the cathode gas diffusion layer 14 and the cathode separator 16.

The electrochemical hydrogen pump 100 of the example may be the same as the electrochemical hydrogen pump 100 of any of the first embodiment, the first example, and the second example except for the aforementioned characteristics.

### (Fourth Example)

An electrochemical hydrogen pump 100 of a fourth example is the same as the electrochemical hydrogen pump 100 of the first embodiment except for the configuration of each cathode gas diffusion layer 14 to be described below.

In the electrochemical hydrogen pump 100 of the example, the layer 14M inward from the first surface layer 14A contains carbon particles and a resin and the volume density of the carbon particles contained in the layer 14M inward from the first surface layer 14A is lower than the volume density of the carbon particles contained in the first surface layer 14A.

The carbon particles contained in the layer 14M inward from the first surface layer 14A may be, for example, artificial graphite particles or natural graphite particles like the carbon particles described in the first example of the first embodiment. Among these, acetylene black is desirably used as the carbon particles from the viewpoint of excellent electric conductivity, but the carbon particles are not limited to this.

Moreover, a material of the resin contained in the layer 14M inward from the first surface layer 14A may be any of resins such as PTFE, FEP, PVDF, ETFE, PCTFE, and PFA like the resin material described in the first example of the first embodiment. Among these, PTFE is desirably used as the resin material from the viewpoint of heat resistance, a water repelling property, and chemical resistance, but the resin material is not limited to this.

Note that the volume density of the carbon particles contained in the layer 14M inward from the first surface layer 14A can be evaluated by, for example, performing polishing to leave only a layer desired to be measured as a sample and evaluating this sample by a constant volume expansion method (automatic dry-process density meter AccuPyc 1340 manufactured by Shimadzu Corporation). This apparatus has a structure in which a sample chamber and an expansion chamber are connected to each other via a valve, and is capable of filling the chamber with helium gas and measuring the volume density of the sample based on changes in the pressures of the sample chamber and the expansion chamber that are caused by opening and closing operations of the valve.

The lower the volume density of the carbon particles contained in the layer 14M inward from the first surface layer 14A is, the higher the gas diffusion property of the layer 14M inward from the first surface layer 14A in the in-plane direction is. Accordingly, in the electrochemical hydrogen pump 100 of the example, the aforementioned configuration can appropriately secure the gas diffusion property of the cathode gas diffusion layer 14 in the in-plane direction.

Moreover, in the electrochemical hydrogen pump 100 of the example, when the layer 14M inward from the first surface layer 14A is formed of, for example, a carbon fiber sheet, impregnating the carbon fibers of the carbon fiber sheet with the resin can improve bonding force between carbon fibers. This can improve the durability of the electrochemical hydrogen pump 100 of the example against warping of the carbon fiber sheet that occurs when the hydrogen compression operation is repeatedly started and stopped.

The electrochemical hydrogen pump 100 of the example may be the same as the electrochemical hydrogen pump 100 of any of the first embodiment and the first to third examples except for the aforementioned characteristics.

### (Second Embodiment)

Fig. 4 is a view illustrating an example of a cathode gas diffusion layer in an electrochemical hydrogen pump of a second embodiment.

In the electrochemical hydrogen pump 100 of the embodiment, the resistivity of a second surface layer 14B of each cathode gas diffusion layer 14 on the cathode catalyst layer 12 side in the thickness direction is lower than the resistivity of a layer inward from the first surface layer 14A in the thickness direction. In this case, as illustrated in Fig. 4, the layer inward from the first surface layer 14A includes an intermediate layer 14C located in an intermediate portion in the thickness direction of the porous carbon sheet 14S.

The resistivities of the second surface layer 14B and the intermediate layer 14C can be evaluated with, for example, a 1-kHz AC ohmmeter ("MODEL 3566" manufactured by Tsuruga Electric Corporation) or the like.

When the cathode gas diffusion layer 14 is formed of carbon fiber sheets, the first surface layer 14A, the second surface layer 14B, and the intermediate layer 14C can be formed by, for example, impregnating front surfaces of a first carbon fiber sheet and a second carbon fiber sheet with carbon particles and a resin as follows.

First, a solution in which the carbon particles and resin powder are dispersed in a solvent is evenly applied to the front surface of the first carbon fiber sheet such that the front surface of the first carbon fiber sheet is impregnated with the solution.

Next, the solution with which the first carbon fiber sheet is impregnated is, for example, dried and heat-treated at a predetermined temperature. A layer containing the carbon particles and the resin is thus included in a surface layer (hereinafter, first surface layer 14A) of the first carbon fiber sheet.

Moreover, a solution in which the carbon particles and resin powder are dispersed in a solvent is evenly applied to the front surface of the second carbon fiber sheet such that the front surface of the second carbon fiber sheet is impregnated with the solution.

Next, the solution with which the second carbon fiber sheet is impregnated is, for example, dried and heat-treated at a predetermined temperature. A layer containing the carbon particles and the resin is thus included in a surface layer (hereinafter, second surface layer 14B) of the second carbon fiber sheet.

Then, the first carbon fiber sheet and the second carbon fiber sheet are bonded to each other such that the back surface of the first carbon fiber sheet come into contact with the back surface of the second carbon fiber sheet. The joining portion of these sheets corresponds to the intermediate layer 14C including a layer containing the carbon particles and the resin.

In this case, the porosities of the first surface layer 14A and the second surface layer 14B are lower than the porosity of the intermediate layer 14C. Moreover, the volume densities of the first surface layer 14A and the second surface layer 14B are higher than the volume density of the intermediate layer 14C. In other words, the volume density of the carbon particles contained in the intermediate layer 14C is lower than the volume densities of the carbon particles contained in the first surface layer 14A and the second surface layer 14B.

The cathode gas diffusion layer 14 of this embodiment can be thus obtained. Specifically, the resistivity of the first surface layer 14A on the cathode separator 16 side in the thickness direction can be set lower than the resistivity of the intermediate layer 14C in the thickness direction. Moreover, the resistivity of the second surface layer 14B on the cathode catalyst layer 12 side in the thickness direction can be set lower than the resistivity of the intermediate layer 14C in the thickness direction.

Note that the manufacturing method and the configuration of the cathode gas diffusion layer 14 described above are examples and the manufacturing method and the configuration are not limited to these examples. For example, the first surface layer 14A, the second surface layer 14B, and the intermediate layer 14C may be formed by impregnating an entire region of a carbon fiber sheet, having a predetermined thickness, with the solution in which the carbon particles and the resin powder are dispersed in the solvent, and then further applying the solution in which the carbon particles and the resin powder are dispersed in the solution evenly on the front surface and the back surface of the carbon fiber sheet.

Moreover, a spray application method, a bar coater application method, a transfer application method, a dip application method, and the like can be given as examples of the method of applying the aforementioned solution, but the application method is not limited to these examples.

In the cathode gas diffusion layer 14, the lower the resistivity of the second surface layer 14B on the cathode catalyst layer 12 side in the thickness direction is, the lower the contact resistance between the second surface layer 14B and the cathode catalyst layer 12 is. Accordingly, in the electrochemical hydrogen pump 100 of the embodiment, setting the resistivity of the second surface layer 14B in the thickness direction lower than the resistivity of the intermediate layer 14C in the thickness direction can reduce the contact resistance between the second surface layer 14B of the cathode gas diffusion layer 14 and the cathode catalyst layer 12. As a result, the electrochemical hydrogen pump 100 of the embodiment can maintain high efficiency in the hydrogen compression operation.

Moreover, in the electrochemical hydrogen pump 100 of the embodiment, when the cathode gas diffusion layer 14 is formed of, for example, the carbon fiber sheets, impregnating the carbon fibers of the carbon fiber sheets with the resin can increase the bonding force between the carbon fibers. This can improve the durability of the electrochemical hydrogen pump 100 of the embodiment against warping of the carbon fiber sheets that occurs when the hydrogen compression operation is repeatedly started and stopped.

Moreover, in the electrochemical hydrogen pump 100 of the embodiment, setting the volume density of the intermediate layer 14C (volume density of the carbon particles contained in the intermediate layer 14C) to a low density can appropriately secure the gas diffusion property of the cathode gas diffusion layer 14 in the in-plane direction.

The electrochemical hydrogen pump 100 of the embodiment may be the same as the electrochemical hydrogen pump 100 of any of the first embodiment and the first to fourth examples of the first embodiment except for the aforementioned characteristics.

### (Third Embodiment)

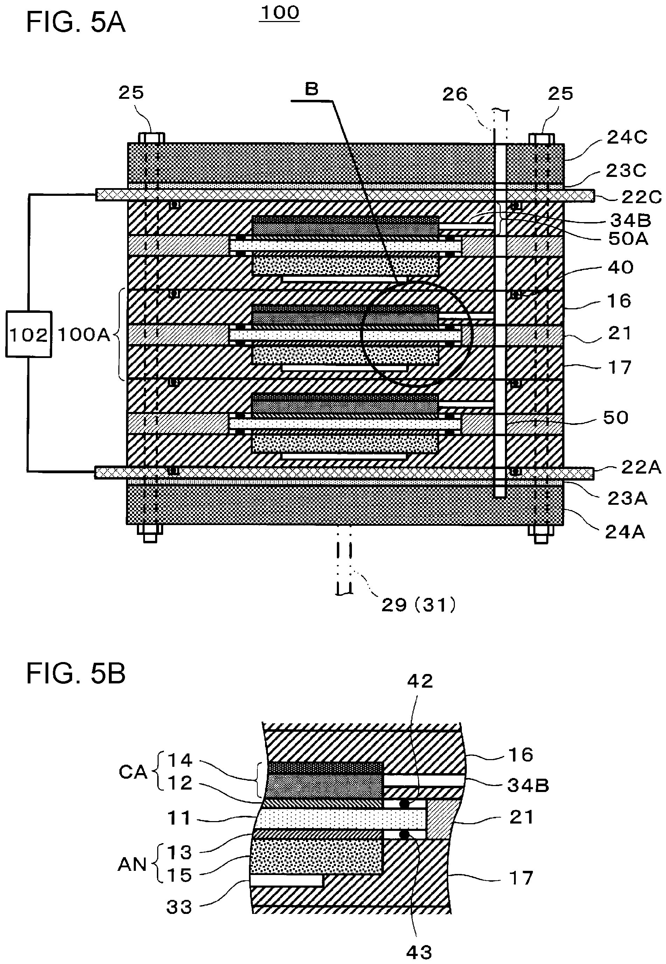

Fig. 5A is a view illustrating an example of an electrochemical hydrogen pump in a third embodiment. Fig. 5B is an enlarged view of portion B in the electrochemical hydrogen pump of Fig. 5A. Note that Fig. 5A illustrates a vertical cross section of the electrochemical hydrogen pump 100 including a straight line passing the center of the electrochemical hydrogen pump 100 and the center of the cathode gas discharge manifold 50 in plan view.

The electrochemical hydrogen pump 100 of the embodiment is the same as the electrochemical hydrogen pump 100 of the first embodiment except for laterdescribed communication paths that allow the first surface layers 14A and the manifold hole 50A to communicate with one another.

In the electrochemical hydrogen pump 100 of the embodiment, the cathode gas discharge manifold 50 communicates with appropriate portions of the cathode gas diffusion layers 14 of the respective hydrogen pump units 100A via second communication paths 34B. Hydrogen having passed the cathode gas diffusion layers 14 and the second communication paths 34B of the hydrogen pump units 100A thereby merges in the cathode gas discharge manifold 50. Then, the merged hydrogen is guided to the cathode gas discharge path 26. In the example illustrated in Figs. 5A and 5B, each cathode separator 16 is provided with the manifold hole 50A into which the cathode gas discharged from the cathode gas diffusion layer 14 and containing the aforementioned compressed hydrogen flows and the second communication path 34B that allows the layer 14M inward from the first surface layer 14A (see Fig. 3) and the manifold hole 50A to communicate with each other. The second communication path 34B may be formed of, for example, a hole provided in the cathode separator 16. The porosity of the layer 14M inward from the first surface layer 14A is higher than or equal to 20%. Moreover, the porosity of the first surface layer 14A is less than 20%.

The porosities of these layers can be evaluated with, for example, the aforementioned mercury porosimeter ("AutoPore III 9410" manufactured by Shimadzu Corporation).

As described above, the cathode gas diffusion layers 14 of the respective hydrogen pump units 100A communicate with one another via the second communication paths 34B of the respective hydrogen pump units 100A and the cathode gas discharge manifold 50.

If the porosity of the layer 14M inward from the first surface layer 14A is less than 20%, there is a risk that the gas diffusion property of this inward layer 14M cannot be maintained. Accordingly, the electrochemical hydrogen pump 100 of the embodiment can be configured such that the porosity of the layer 14M inward from the first surface layer 14A is set higher than or equal to 20% to facilitate diffusion of the cathode gas in the inward layer 14M. This facilitates the discharge of the cathode gas to the manifold hole 50A through the second communication path 34B.

Moreover, in the electrochemical hydrogen pump 100 of the embodiment, setting the porosity of the first surface layer 14A to a porosity less than 20% can reduce the contact resistance between the first surface layer 14A of the cathode gas diffusion layer 14 and the cathode separator 16. Specifically, the lower the porosity of the first surface layer 14A is, the greater the contact area between the first surface layer 14A and the cathode separator 16 is and the contact resistance between them can be thus reduced. From this viewpoint, the porosity of the first surface layer 14A is desirably almost 0%. The first surface layer 14A may be formed of, for example, a carbon sheet with a porosity of almost 0%.

As described above, the electrochemical hydrogen pump 100 of the embodiment can achieve both an improvement in the gas diffusion property of the cathode gas diffusion layer 14 and a reduction in the contact resistance between the cathode gas diffusion layer 14 and the cathode separator 16.

The electrochemical hydrogen pump 100 of the embodiment may be the same as the electrochemical hydrogen pump 100 of any of the first embodiment, the first to fourth examples of the first embodiment, and the second embodiment except for the aforementioned characteristics.

Note that the first embodiment, the first to fourth examples of the first embodiment, the second embodiment, and the third embodiment may be combined with one another unless they exclude one another.

Many improvements and other embodiments of the present disclosure are apparent to those skilled in the art from the aforementioned description. Accordingly, the aforementioned description should be interpreted merely as examples and is provided to teach those skilled in the art the best mode for executing the present disclosure. Details of the structure and/or the functions can be substantially changed without departing from the spirit of the present disclosure. For example, the cathode gas diffusion layer 14 described above can be applied to other compression apparatuses such as a water electrolysis apparatus.

### Industrial Applicability

One aspect of the present disclosure can be used in a compression apparatus in which a contact resistance between a cathode separator and a cathode gas diffusion layer formed of a porous carbon sheet can be reduced from that in the technique in the related art.

### Reference Signs List

11 electrolyte membrane
12 cathode catalyst layer
13 anode catalyst layer
14 cathode gas diffusion layer
14A first surface layer
14B second surface layer
14C intermediate layer
14S porous carbon sheet
15 anode gas diffusion layer
16 cathode separator
17 anode separator
21 insulator
22A anode power supply plate
22C cathode power supply plate
23A anode insulating plate
23C cathode insulating plate
24A anode end plate
24C cathode end plate
25 fastener
26 cathode gas discharge path
27 anode gas introduction manifold
29 anode gas introduction path
30 anode gas discharge manifold
31 anode gas discharge path
33 anode gas flow path
34A first communication path
34B second communication path
35 first anode gas passing path
36 second anode gas passing path
40 sealing member
42 sealing member
43 sealing member
50 cathode gas discharge manifold
50A manifold hole
100 electrochemical hydrogen pump
100A hydrogen pump unit
102 voltage applicator
AN anode electrode
CA cathode electrode

## Claims

1. A compression apparatus comprising:
an electrolyte membrane;
an anode catalyst layer in contact with one of main surfaces of the electrolyte membrane;
a cathode catalyst layer in contact with the other of the main surfaces of the electrolyte membrane;
an anode gas diffusion layer in contact with the anode catalyst layer;
a cathode gas diffusion layer in contact with the cathode catalyst layer;
a cathode separator that is provided on the cathode gas diffusion layer; and
a voltage applicator that applies voltage between the anode catalyst layer and the cathode catalyst layer, the compression apparatus configured to generate compressed hydrogen by applying the voltage with the voltage applicator to move protons, taken out of an anode fluid supplied to the anode catalyst layer, to the cathode catalyst layer via the electrolyte membrane, wherein
the cathode gas diffusion layer includes a porous carbon sheet and is configured such that a porosity of a first surface layer in a side of the cathode separator is lower than a porosity of a layer inward from the first surface layer.

2. The compression apparatus according to Claim 1, wherein the cathode gas diffusion layer includes a layer containing carbon particles and a resin in the first surface layer.

3. The compression apparatus according to Claim 1 or 2, wherein, in the cathode gas diffusion layer, a resistivity of the first surface layer in the side of the cathode separator in a thickness direction is lower than a resistivity of the layer inward from the first surface layer in the thickness direction.

4. The compression apparatus according to any one of Claims 1 to 3, wherein, in the cathode gas diffusion layer, a volume density of the first surface layer is higher than a volume density of the layer inward from the first surface layer.

5. The compression apparatus according to Claim 2, wherein the layer inward from the first surface layer contains carbon particles and a resin and a volume density of the carbon particles contained in the layer inward from the first surface layer is lower than a volume density of the carbon particles contained in the first surface layer.

6. The compression apparatus according to any one of Claims 1 to 5, wherein
the cathode separator is provided with a manifold hole into which a cathode gas discharged from the cathode gas diffusion layer and containing the compressed hydrogen flows and a first communication path that allows the first surface layer and the manifold hole to communicate with each other, and
in the first surface layer, a porosity of at least a path extending from a surface in contact with the first communication path to a surface in contact with the layer inward from the first surface layer is higher than or equal to 20%.

7. The compression apparatus according to any one of Claims 1 to 5, wherein the cathode separator is provided with a manifold hole into which a cathode gas discharged from the cathode gas diffusion layer and containing the compressed hydrogen flows and a second communication path that allows the layer inward from the first surface layer and the manifold hole to communicate with each other, and
the porosity of the layer inward from the first surface layer is higher than or equal to 20%.

8. The compression apparatus according to Claim 7, wherein the porosity of the first surface layer is less than 20%.
